(19) Europäisches Patentamt
European Patent Office
Office européen des brevets

(11) Numéro de publication: **0 024 262**
**B1**

(12) **FASCICULE DE BREVET EUROPEEN**

(45) Date de publication du fascicule du brevet: **23.03.83**

(51) Int. Cl.³: **B 63 G 13/00**, G 01 S 15/74, G 01 H 3/00

(21) Numéro de dépôt: **80810251.1**

(22) Date de dépôt: **14.08.80**

(54) **Dispositif électroacoustique de signalisation et d'identification subaquatique d'un navire.**

(30) Priorité: **14.08.79 CH 7424/79**

(43) Date de publication de la demande: **25.02.81 Bulletin 81/8**

(45) Mention de la délivrance du brevet: **23.03.83 Bulletin 83/12**

(84) Etats contractants désignés: **BE DE FR IT NL SE**

(56) Documents cités:
**FR-A-1 219 744**
**US-A-3 071 752**
**US-A-3 092 684**

(73) Titulaire: **BLANCHUT & BERTRAND S.A., Rue Eynyrd 8, CH-1205 Genève (CH)**

(72) Inventeur: **Eberlin, Philippe, 16, chemin Thury, CH-1206 Genève (CH)**
Inventeur: **Rossi, Mario, Cité-Derrière 8, CH-1005 Lausanne (CH)**

(74) Mandataire: **Dietlin, Henri et al, DIETLIN, MOHNHAUPT & Cie 3, quai du Mont-Blanc, CH-1201 Genève (CH)**

**EP 0 024 262 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

BUNDESDRUCKEREI BERLIN

Dispositif électroacoustique de signalisation et d'identification subaquatique d'un navire

L'invention a pour objet un dispositif électroacoustique de signalisation et d'identification subaquatique d'un navire, destiné à prévenir, en cas de conflit armé, l'attaque sous-marine intempestive des navires, neutres, -hôpitaux, -des services sanitaires, -de sauvetage, et de manière générale, de ceux protégés par les Conventions de Genève, par l'émission d'un signal acoustique subaquatique.

L'objectif principal de l'arme sous-marine classique est toujours la destruction du tonnage marchand du ou des adversaires pour réaliser le blocus maritime du ou de ces derniers. Les progrès de la lutte anti sous-marine et des performances des submersibles font que ceux-ci restent en immersion profonde, silence à bord et écoutent au moyen de sonars passifs les bruits subaquatiques dans leur zone de surveillance. Après détection d'un objectif, sa destruction s'effectue par différents types de torpilles, par exemple filoguidées et acoustiques, qui ont des portées jusqu'à vingt cinq milles marins. Dans ces circonstances, la détection et l'identification d'un objectif éventuel se font uniquement au son et pratiquement jamais visuellement: un sous-marin ne peut plus guère se permettre de remonter en plongée périscopique, à fortiori en surface, vu le grand danger d'être détecté et détruit à très bref délai. Par son mouvement, un navire émet un bruit subaquatique propre: chant des hélices, bruit des machines principales et auxiliaires, remous d'étrave et d'avancement dans l'eau. Ce bruit propre est à la base de la détection et de l'identification des navires par les submersibles au moyen des sonars passifs. Ces derniers sont des réseaux d'écoute directifs couvrant l'horizon secteur par secteur. Ils sont constitués globalement d'hydrophones, de réseaux de compensation, d'amplificateurs et de différents dispositifs de traitement des signaux. Ils sont desservis par des opérateurs entraînés qui écoutent les bruits captés et qui sont secondés par des indicateurs automatiques, plus ou moins évolués selon les différentes marines nationales et la classe des submersibles. Dans la règle, l'écoute par des opérateurs entraînés est la technique la plus simple et est généralisée à tous les types de submersibles.

L'augmentation du niveau de bruit en sortie du sonar passif dans un gisement donné conduit à la détection d'un objectif potentiel. Les caractéristiques spectrales du signal (signature acoustique) en permettent l'identification en »ami« ou en »non-ami« et en types de bâtiments (cargons, chasseurs de sous-marins, navires de combat, etc. . . .).

Si en théorie il est possible d'identifier n'importe quel navire par sa signature acoustique, en pratique cela n'est réalisable que pour certains navires ou types de navires connus de chaque marine nationale. En particulier, il est pratiquement impossible de différencier les transports neutres et ceux protégés par les Conventions de Genève, des transports bélligérants. En cas de guerre, les premiers seront considérés comme non-ami, donc courront un très grand risque d'être coulés sans préavis. Dans ces conditions, une puissance navale pourra exercer un blocus maritime total pour les neutres et les services sanitaires en invoquant l'impossibilité de garantir l'immunité à leurs navires vu le danger sous-marin.

Une telle situation est grave pour les neutres, en particulier pour la Suisse, dont le ravitaillement par voie maritime serait dangereusement menacé, voire coupé en cas de crise ou de conflit armé. Par ailleurs, par ce biais, les neutres seraient soumis à d'intolérables pressions politiques de la part des belligérants.

Jusqu'à ce jour, aucun système de signalisation et d'identification acoustique subaquatique n'a été développé et utilisé. On note toutefois qu'en 1917, un accord entre les états belligérants avait prévu que les navires hôpitaux alliés devaient être accompagnés par des bateaux à roues. Leur signature acoustique particulière permettait l'identification des convois sanitaires par les sous-marins allemands. En 1972, lors de la Conférence d'experts gouvernementaux sur la réaffirmation et le développement du droit international humanitaire applicable dans les conflits armés, le Comité International de la Croix Rouge, CICR, s'est préoccupé de la signalisation et de l'identification sanitaires. Le problème de la protection contre des attaques sous-marines est soulevé dans le mémoire technique (Genève, avril 1972). On y suggère l'émission d'un signal sonore sous-marin, selon une cadence convenue. Les experts australiens proposaient d'introduire dans l'annexe technique des Conventions de Genève, un nouvel article relatif à la signalisation acoustique subaquatique des navires hôpitaux. La teneur en est la suivante:

1. Les bateaux et embarcations des services sanitaires peuvent être identifiés par un signal transmis par un sonar omnidirectionnel.
2. La puissance émise sera au moins égale à celle rayonnée dans l'eau dans la bande de fréquence d'émission, par les navires en question, à leur vitesse de croisière maximale.
3. Le signal sera transmis à des fréquences de 3, 6 et 12 kHz séquentiellement, et consistera en les lettres HS (Hotel Sierra) en code morse émises trois fois à chaque fréquence, chaque groupe de trois transmissions étant suivi d'un signal continu en cinq secondes à la même fréquence. Le cycle de transmission serait répété à intervalles de deux minutes au maximum.

Jusqu'à présent, cette proposition n'a pas donné lieu à la réalisation d'un système de signalisation et selon les calculs effectués par la déposante, ce système ne serait pas en mesure de donner satisfaction.

Le but de l'invention est de proposer un dispositif permettant l'identification, par des submersibles, des navires par émission d'un signal acoustique subaquatique. En installant un tel dispositif et d'autres moyens d'identification à bord des ses navires (contre des attaques par air, par navires de surface ou par batteries côtières), un état neutre peut revendiquer leur immunité sur mer, tout en se soumettant aux contrôles d'un blocus éventuel. Le principe et la construction du dispositif proposé sont tels qu'il ne peut être utilisé à d'autres fins que la signalisation et l'identification du navire qui l'utilise. Son usage pour la détection et la localisation subaquatiques est donc impossible.

Le dispositif selon l'invention est caractérisé en ce qu'il comprend un émetteur comprenant au moins un transducteur électroacoustique monté sur la coque du navire de manière à être immergé et commandé par un circuit électronique agencé pour émettre à fréquence audible un signal d'identification propre au navire et constitué d'une suite de lettres ou de chiffres émis en code précédé d'un signal de début d'émission, l'émetteur et son circuit de commande étant dimensionnés pour que le signal émis sur au moins une fréquence choisie pour chaque navire située entre 4 et 6 kHz, de manière à être dans le spectre de bruit propre du navire, mais au-dessus des fréquences discrètes des raies verticales du spectre et différente de leurs harmoniques et à une puissance telle que le niveau d'intensité acoustique $LI_{sl}$ (dB), ramené à la distance unité, du signal d'identification de fréquence moyenne $f_s$ (Hz) est plus grand ou égal au niveau d'intensité acoustique $LI_{bl}$, ramené à la distance unité, de la bande de bruit, centrée sur la fréquence $f_b$ (Hz), donnant lieu à la détection à grande distance du navire porteur par son bruit subaquatique propre dans le bruit de fond ambiant de la mer majoré d'un paramètre $\Delta$ dont la valeur en décibels se calcule par la relation:

$$\Delta = 40\,\alpha_s + 10\log\frac{B_{cs}}{B_{cb}} - 15\log\frac{f_s}{f_b} + 6\,,$$

où:

$\alpha_s$ = coefficient d'absorption du son en mer à la fréquence $f_s$,
$B_{cs}$ et $B_{cb}$ (Hz) = bandes critiques de masquage respectives aux fréquences $f_s$ et $f_b$.

Des résultats satisfaisants ont été obtenus par la titulaire pour des valeurs de $\Delta$ de 7, 14 et 19 dB pour des fréquences d'émission correspondantes de 4, 5 et 6 kHz.

Le circuit d'émission est agencé de préférence pour produire en code des signes représentant les chiffres et les lettres dont la durée est d'envi: :n 100 à 800 ms, les espaces entre signes étant de 800 ms et les espaces entre groupes de signes représentant un chiffre ou une lettre étant de 1600 ms.

Le signal d'identification peut être en code morse, les signes points ayant une durée de 200 ms et les signes traits une durée de 700 ms.

Le circuit peut être agencé pour produire un signal d'émission sur deux fréquences $f_1$ et $f_2$ différent entre elles de quelques dizaines de Hz jusqu'à 200 Hz, les signes de rang impair dans la succession de signes formant le signal étant émis à la fréquence $f_1$, les signes de rang pair à la fréquence $f_2$.

Dans un mode d'exécution préféré, l'émetteur comprend quatre transducteurs placés en carré, le circuit de commande présentant des commutateurs aptes à brancher les transducteurs deux à deux en opposition de phase selon deux fois quatre arrangements successifs formant chacun une séquence, de manière à couvrir l'horizon en deux fois quatre secteurs d'émission, un code complet de signaux étant émis pour chaque arrangement deux à deux avec des pauses intermédiaires.

L'émetteur est de préférence monté dans un caisson étanche placé dans les fonds du navire au-dessus d'une fenêtre pratiquée dans la coque, le ou les transducteurs étant placés verticalement, leurs membranes d'émission étant sensiblement dans le plan de l'ouverture de la coque.

Le circuit de commande de l'émetteur comprend un générateur d'impulsions fonctionnant comme horloge et relié à un séquenceur ordonnant la succession des opérations aboutissant à la formation du signal codé, lui-même branché avec l'émetteur par l'intermédiaire d'un encodeur produisant au moins une fréquence d'émission du signal et d'un amplificateur, le générateur étant relié à un tableau de commande permettant de choisir tous les paramètres d'émission. L'encodeur est branché à l'amplificateur par l'intermédiaire d'un conditionneur transformant les impulsions carrées produites par l'encodeur en impulsions sinusoïdales et des relais de commutation des transducteurs sont intercalés entre l'amplificateur et l'émetteur, les relais étant commandés par le séquenceur relié directement au tableau de commande.

Il est visible que le dispositif selon l'invention permet à un sous-marin d'identifier le navire qui le porte, étant donné que la fréquence du signal d'identification est choisie entre 4 et 6 kHz, c'est-à-dire dans le spectre du bruit du navire qui sera détecté par le sous-marin. En effet, les sous-marins ont à bord au minimum un sonar passif d'écoute allant généralement de 500 Hz à environ 7 kHz. Ils ont en général plusieurs sonars permettant de couvrir des fréquences de 100 à 50 000 Hz. Par conséquent, dès que le sous-marin commencera à détecter la présence d'un navire, le signal d'identification lui

parviendra, car le dit signal est émis à une fréquence différente des raies verticales du spectre du bruit et leurs harmoniques (correspondant à des bruits de machines à l'intérieur du navire), de manière à n'être ni confondu avec, ni masqué par, ces raies ou leurs harmoniques. D'autre part, la puissance du signal émis doit être aussi réduite que possible, de manière à limiter l'encombrement et le coût du dispositif d'émission, mais assez grande pour que le signal soit toujours détecté et reconnu lorsque le navire est détecté par son bruit subaquatique propre (bruit d'avancement, des remous d'étrave, des hélices, etc.) dans le bruit de fond ambiant de la mer, dans les conditions les plus défavorables pour le signal et les plus favorables pour le bruit propre.

Le dessin annexé représente, à titre d'exemple, un mode d'exécution d'un dispositif électroacoustique de signalisation et d'identification selon l'invention, ainsi que des schémas explicatifs des signaux et codes utilisés et des phénomènes subaquatiques en relation avec le fonctionnement du dispositif.

Dans le dessin:

La fig. 1 représente un diagramme illustrant l'allure générale du spectre typique du bruit subaquatique propre émis par un navire de surface à une distance d'au moins quelques centaines de mètres,

la fig. 2 est une représentation graphique d'un code de base de signalisation et d'identification d'un navire particulier, le code étant formé de lettre émises en morse,

la fig. 3 est une coupe verticale à travers un émetteur électroacoustique comprenant quatre transducteurs montés dans les doubles fonds d'un navire porteur, l'émetteur envoyant son émission de signalisation et d'identification par une ouverture ménagée sous la coque à cet effet,

la fig. 4 est une vue de dessous de l'émetteur représenté en coupe dans la fig. 3 montrant les quatre transducteurs électroacoustiques d'émission montés sur une plaque de base formant une partie d'un caisson étanche solidaire de la coque du navire, dans lequel est monté l'émetteur,

la fig. 5 est un schéma explicatif illustrant la manière dont l'horizon est balayé par l'émission du code de signalisation et d'identification selon quatre secteurs successifs représentant une séquence d'émission, et

la fig. 6 représente un schéma-bloc d'un circuit de commande du transducteur décrit dans les fig. 3 et 4.

Avant de passer à la description du mode d'exécution du dispositif de signalisation et d'identification, il sera donné préalablement quelques explications relatives aux considérations techniques qui ont précédé la réalisation du mode d'exécution.

Le principe du dispositif de signalisation et d'identification consiste en l'émission périodique en morse, d'un code d'identification contenant l'indicatif du navire porteur (call sign). L'émission se fait par modulation tout ou rien d'une onde entretenue à fréquence audible. Fréquences, puissance, durées et rythme des signes morse du code émis sont les paramètres caractéristiques du dispositif. Ils ont été déterminés à partir des deux critères suivants:

– le code d'identification doit impérativement être reconnu par un submersible lorsque ce dernier détecte le bruit subaquatique propre du navire équipé du dispositif,
– la puissance d'émission doit être aussi réduite que possible, de manière à limiter encombrement et coût du dispositif, et permettre son installation sur de petits navires, mais assez grande pour satisfaire au premier critère.

La détermination des paramètres s'est effectuée par calculs, simulation et essais, en prenant en considération les facteurs suivants:

1. bruit subaquatique propre du navire dont le spectre est représenté dans la fig. 1. Le spectre typique se compose d'une partie continue 1 (bruit des remous d'étrave, d'avancement et des hélices) et de raies 2 (bruit des machines et auxiliaires) correspondant à des fréquences discrètes, décroissantes avec la fréquence. Comme représenté dans la fig. 1, le bruit d'avance du navire représenté par la ligne 1 est composé de fréquences allant jusqu'à 20 kHz. Les raies verticales 2 représentant le bruit des machines et auxiliaires à l'intérieur de la coque ont en général des fréquences d'autant plus élevées que le navire est rapide ou de faible tonnage. D'autre part, ces raies 2 ont toujours des harmoniques dont il faut tenir compte. Après de nombreux calculs et essais, le titulaire est arrivé à la conclusion que la bande de fréquence d'émission du signal d'identification doit se situer entre 4 et 6 kHz. Cette bande de fréquences est représentée en 3 dans le diagramme du bruit propre d'un navire.
2. identification d'un navire: la signature acoustique d'un navire consiste principalement en les raies du spectre du bruit propre. Il est cependant évident que ces raies doivent être connues pour que le navire puisse être identifié. L'émission d'un signal de reconnaissance dans le spectre de bruit propre d'un navire est donc indispensable pour confirmer la signature acoustique du dit navire, ceci d'autant plus que cette signature peut varier en fonction des conditions externes comme expliqué ci-dessous.
3. propagation subaquatique du son: l'hypothèse de la propagation normale fait intervenir une

décroissance du son par divergence géométrique (loi en $r^{-1}$ ou $r^{-2}$, où r est la distance à la source) et une atténuation par absorption: cette dernière croît exponentiellement avec la distance r, et augmente rapidement avec la fréquence du son.

4. irrégularité de propagation: du fait des conditions de propagation en milieu marin (réflexions sur le fond et la surface en continuelle agitation, incurvation des rayons sonores par la bathythermie), le signal acoustique capté en un point donné subit d'importantes variations de niveau (analogues au fading des ondes radioélectriques dans l'atmosphère); en particulier un signal de courte durée à l'émission (par exemple »points« et »traits« d'un code morse) peut donner lieu à la réception de deux signaux, voire plus; ainsi un »point« peut être redoublé par un écho fort et sera interprété en réception comme deux »points«; un »trait« peut être coupé en deux tronçons et interprété comme deux »points« ou un couple »trait-point« ou »point-trait«, etc....
5. masquage du code d'identification: pour être détecté et identifié par un opérateur entraîné ou un analyseur automatique dans le bruit propre du navire porteur ou le bruit de fond ambiant (bruit de fond de la mer), le code doit avoir à la réception une intensité dépendant de sa fréquence et des spectres des bruits masquants.

En fonction des critères et conditions définis ci-dessus, le code C d'identification est représenté dans la fig. 2 et se présente comme suit:

Le code C de base représentant le signal d'identification dans la bande de fréquence de 4 à 6 kHz est composé d'un signal de début de transmission et de l'indicatif d'appel du navire porteur éventuellement répété une seconde fois. Le signal de début de transmission —.—.— facilite l'identification des signes morses points et traits dont les durées et rapports sont différents de ceux adoptés en télégraphie puisque déterminés en fonction des conditions de propagation subaquatique du son. A titre d'exemple, la fig. 2 montre le code du bateau suisse m/s Regina, dont l'indicatif d'appel radio est H B D R. Le code C sera utilisé et émis en morse sur la bande de fréquence allant de 4 à 6 kHz en tout. Les durées des signes morses sont de 200 ms pour les points (.) et de 700 ms pour les traits (—). Les espaces sont de 800 ms entre signes et de 1600 ms entre lettres. En prévision de conditions de propagation particulières, ces durées sont programmables et pourront être variées par pas de 100 ms entre 100 et 800 ms pour points et traits et de 200 ou 400 ms entre 200 et 3200 ms pour les espaces.

Pour chaque navire, deux fréquences différentes d'émission $f_1$ et $f_2$ seront choisies dans la bande comprise entre 4 et 6 kHz et différeront entre elles de quelques dizaines de Hz jusqu'à 200 Hz. Elles seront bien évidemment choisies en fonction de la signature acoustique des navires à équiper (fig. 1) de manière à ne pas tomber dans les raies 1 du spectre ou dans leurs harmoniques et également en tenant compte de la dimension et de l'encombrement de l'émetteur. Pour chaque signe (point ou trait) du code C, on émet une salve de sinusoïdes de durée adéquate, alternativement sur les deux fréquences $f_1$ et $f_2$. Les salves des signes de rang impair sont émises à la fréquence $f_1$, celles des signes pairs à la fréquence $f_2$. Entre deux signes, l'émission est arrêtée pendant une durée correspondant soit à l'espace signe, soit à l'espace lettre.

Pour éviter de devoir recourir à un émetteur omnidirectionnel de grande puissance, l'émission est directive avec un axe de directivité variable par pas. L'horizon entier est alors couvert secteur par secteur, par commutation séquentielle de l'axe de directivité, un code complet étant émis dans chaque position.

Une séquence d'émission S est constituée d'un certain nombre de codes C séparés par des pauses P (périodes de silence) de durée programmable (10, 20, 30, 40 et 60 s). Par exemple, pour un balayage de l'horizon en quatre secteurs, la séquence d'émission se compose de quatres codes C et de trois pauses P soit:

C—P—C—P—C—P—C.

La manière dont le balayage de l'horizon en quatre secteurs est effectué sera expliquée plus loin en regard de la fig. 5.

L'émission d'une séquence S est entièrement automatique. Une base de temps permet de fixer le nombre de séquences par heure à 1, 2, 3, 4 ou 8. Pour une portée maximale de 40 km, la puissance d'émission $P_a$ doit être telle que

$$LI_{sl} \geq LI_{bl} + \Delta \text{ (dB)},$$

où

$LI_{sl}$ est le niveau d'intensité acoustique, ramené à la distance unité, du signal d'identification de fréquence moyenne $f_s$ (Hz); ce niveau est défini comme le minimum dans les directions d'émission correspondant aux intersections des lobes de directivité contigus de l'émetteur, dans le cas d'un balayage de l'horizon secteur par secteur.

$LI_{bl}$ est le niveau d'intensité acoustique, ramené à la distance unité, de la bande de bruit, centrée sur la fréquence $f_b$ (Hz), donnant lieu à la détection à grande distance du navire

porteur, par son bruit subaquatique propre, dans le bruit de fond ambiant de la mer.

$LI_{sl}$ et $LI_{bl}$ sont exprimés en décibels par rapport à l'intensité de référence Ir, égale à 6,5 nW/m² en acoustique sous-marine.

$\Delta$ est un paramètre dont la valeur en décibels se calcule par la formule générale

$$\Delta = \Delta\alpha \cdot r + 10 \log \frac{B_{cs}}{B_{cb}} - 15 \log \frac{f_s}{f_b} + \Delta M - \Delta D, \text{ (dB)}$$

avec

$\Delta\alpha$ (dB/km), différence des coefficients d'absorption du son dans l'eau de mer, aux fréquences $f_s$ et $f_b$,
r (km), portée maximale de détection du navire porteur, par une bande de fréquence, centrée sur $f_b$, de son bruit subaquatique propre, dans le bruit de fond ambiant de la mer,
$B_{cs}$ et $B_{cb}$ (Hz), bandes critiques de masquage, respectivement aux fréquences $f_s$ et $f_b$,
$\Delta M$ (dB), différence des rapports de perception aux fréquences $f_s$ et $f_b$, d'un signal dans un bruit en sortie d'un sonar passif,
$\Delta D$ (dB), différence des directivités d'un sonar passif, aux fréquences $f_s$ et $f_b$.

En tenant compte d'une portée maximale requise de 40 km, et des situations la plus favorable pour la détection du navire et la plus défavorable pour la réception du signal d'identification, on obtient la formule pratique simplifiée suivante:

$$\Delta = 40 \cdot \alpha_s + 10 \log \frac{B_{cs}}{B_{cb}} - 15 \log \frac{f_s}{f_b} + 6$$

avec, $B_{cs}$, $B_{cb}$, $f_s$ et $f_b$, comme ci-dessus, et $\alpha_s$, coefficient d'absorption du son en mer à la fréquence $f_s$.

A titre d'exemple, on obtient pour $f_b = 1$ kHz, et des fréquences $f_s$ de 4, 5 et 6 kHz, respectivement des valeurs de $\Delta$ de 7, 14 et 19 dB.

Toutefois, la puissance d'émission doit être limitée de manière à éviter la cavitation au droit des transducteurs. En particulier, en cas de faible profondeur, le navire adoptera une vitesse de croisière, de manière à réduire $NI_{bpl}$, la puissance d'émission étant limitée.

Dans les fig. 3, 4, respectivement 5, est représenté un émetteur électroacoustique 5 et une armoire électrique contenant les circuits de commande 6 de l'émetteur 5. L'émetteur 5 est situé dans les doubles fonds du navire porteur et rayonne directement dans la mer par une ouverture 7 (fig. 3) ménagée dans la coque 8 à cet effet. L'armoire de commande comprenant le circuit 6 (fig. 6) est située dans la salle des machines ou dans les locaux annexes, ou dans tout autre local présentant les qualités requises. Elle est reliée d'une part au réseau électrique de bord du navire, et d'autre part à l'émetteur électroacoustique par des câbles électriques adéquats 30 (fig. 3).

L'émetteur 5 comprend quatre transducteurs électroacoustiques 10, 11, 12 et 13 placés verticalement, leurs faces parlantes étant dirigées vers le fond de la mer, montés en carré et alimentés chacun séparément par des câbles électriques 30 provenant de l'armoire électrique des circuits de commande 6. Les quatre transducteurs forment un réseau d'émission. La configuration de ce réseau (distance entre axes, phases des tensions d'alimentation) est fixée de manière à obtenir les différentes directivités voulues aux fréquences de travail prévues. C'est par commutation des alimentations des transducteurs que l'on réalise une directivité variable par pas couvrant l'horizon secteur par secteur.

La fig. 5 représente la manière dont les alimentations des quatre transducteurs 10 à 13 est commutée pour émettre les codes complets d'identification selon la configuration donnée dans la fig. 2 successivement selon quatre axes différents. Selon le schéma de la fig. 5a, les deux transducteurs 10 et 11 sont alimentés en opposition de phase, c'est-à-dire avec un déphasage de 180° représenté par les signes + et −. On obtient alors une émission dans les deux sens selon la direction représentée par la ligne 14 de la fig. 5a. Le code entier représentant le signal de la fig. 2 est émis, puis le circuit de commande de la fig. 6 change la commutation des transducteurs selon le schéma de la fig. 5b. Après ce changement de commutation, le code C est à nouveau émis selon les deux sens de la ligne 15 de la fig. 5b. Entre les deux émissions, il est prévu une pause comme décrit plus haut. On passe ensuite aux émissions successives avec pauses intermédiaires, selon les directions données dans les fig. 5c et 5d, les quatre codes émis selon les fig. 5a à 5d représentant une séquence. Dans la deuxième séquence des quatre codes suivant les fig. 5e, 5f, 5g et 5h, on émet à nouveau selon les quatre mêmes axes, mais avec des transducteurs différents. En effet, on émet dans la fig. 5e selon un axe 16 parallèle à l'axe 14 de la fig. 5a avec les transducteurs 12 et 13 au lieu des transducteurs 10 et 11. Cette manière de commuter permet d'équilibrer les temps d'utilisation de chaque transducteur et d'éviter ainsi un vieillissement trop rapide d'un transducteur par rapport à un autre. A la fin des deux séquences de quatre codes chacune, on revient au branchement de la fig. 5a et le cycle recommence. Les séquences

qui viennent d'être décrites permettent à l'aide des quatre transducteurs commutés deux à deux, de balayer l'horizon en quatre secteurs selon les quatre axes représentés dans la fig. 5 en étant assuré d'une bonne propagation du signal tout autour du navire signalisateur. Il est cependant évident que l'on peut également balayer l'horizon avec un plus grand nombre de transducteurs commutés deux à deux ou trois à trois. Toutes les combinaisons sont possibles et on est limité que pour des raisons de coût et d'encombrement.

Il est encore visible pour l'homme du métier qu'un émetteur composé de trois transducteurs commutés deux à deux ou alternativement alimenté selon les combinaisons de un transducteur, puis deux, etc. . . ., peut également donner satisfaction. A la limite, un seul transducteur peut être utilisé. Dans ce cas, il est évident que la principale composante d'émission verticale dirigée vers le bas sera perdue. Un seul transducteur devra donc obligatoirement avoir une puissance beaucoup plus élevée, étant donné qu'une bonne partie de sa puissance d'émission est dirigée en pure perte vers le fond de la mer.

Dans le cas où un seul transducteur est utilisé, il est également possible de le placer horizontalement sur un dispositif non représenté, agencé pour effectuer une rotation de 360° par rapport à la verticale.

Une combinaison de quatre transducteurs telle que celle décrite dans le mode d'exécution des fig. 3 à 6 a donné d'excellents résultats, car le fait que ces transducteurs soient branchés deux à deux en opposition de phase donne naissance à des composantes d'émission sensiblement horizontales.

L'émetteur 5 est monté dans une ouverture circulaire de la coque dans les doubles fonds du navire porteur, de préférence dans un water-ballast. Il est situé environ au tiers arrière du navire et à une distance latérale de la quille suffisante pour ne subir aucun dégât par les tins lorsque le navire est en cale sèche ou sur dock flottant.

Les fig. 3 et 4 montrent les dispositions constructives typiques de l'émetteur 5. Dans cet exemple, les quatre transducteurs 10 à 13 sont des transducteurs électroacoustiques type TR-61A de la firme Massa. Il s'agit de transducteurs piézoélectriques disponibles sur le marché. Il va de soi que tout autre transducteur de caractéristiques similaires ou supérieures peut être utilisé. Les transducteurs sont montés verticalement sur une plaque de base 21 (fig. 3 et 4). Vues de dessous (côté mer), les faces parlantes des transducteurs sont comme mentionné plus haut, disposés selon un carré, la distance latérale d entre transducteurs voisins étant la plus réduite possible, tenant compte des problèmes constructifs de l'ensemble. L'ouverture circulaire 7 (fig. 3) est découpée dans la coque du navire, son pourtour étant renforcé par un anneau de renfort 22. La plaque de base 21 est vissée sur l'anneau de renfort 22 au moyen de boulons 23. Deux positions sont possibles: dans la première, les côtés du carré formé par les transducteurs sont respectivement parallèles et perpendiculaires à l'axe longitudinal du navire; dans la seconde, ce sont les diagonales de ce carré qui le sont. Un anneau intercalaire 24 est disposé entre l'anneau de renfort 22 et la plaque de base 21 de manière à obtenir une distance e entre les faces parlantes des transducteurs et le côté extérieur de la coque 8 comprise entre 25 et 35 mm. L'émetteur 5 est entouré par un caisson étanche 25 soudé sur l'anneau de renfort 22 et fermé à l'aide de boulons 26 par un couvercle 27. Un joint d'étanchéité 28 est intercalé entre le caisson 25 et le couvercle 27. Lorsque l'émetteur n'est pas en service, une plaque de protection 29 amovible est boulonée dans l'ouverture 7 de la coque 8. Les câbles d'alimentation 30 des transducteurs 10 à 13 traversent le caisson étanche 25 au moyen de presse-étoupes 31 et sont amenés à l'armoire électronique de commande non représentée via un tuyau de protection 32 et le tunnel des tuyauteries du navire. Les transducteurs 10 à 13 sont finalement maintenus contre la plaque de base 21 par des boulons 33 après avoir été introduits dans des découpures 34 (fig. 4) préalablement prévues dans la plaque 21 et correspondent au pourtour inférieur des transducteurs, ces découpures ont un pofil tronconique usiné avec soin de manière à être ajustées aux transducteurs réalisant ainsi l'étanchéité de l'émetteur. Comme représenté dans la fig. 3, les transducteurs 10 à 13 sont encore maintenus à leur partie supérieure par un cadre 35 rendu solidaire de la plaque 21 au moyen de boulons 36, la distance entre la plaque 21 et le cadre 35 étant maintenue à l'aide de douilles d'espacement 37. Les câbles 30 sont raccordés entre eux à l'intérieur du caisson 25 par des raccords étanches 9.

Les dimensions et dispositions constructives de l'ensemble sont déterminées de cas en cas, en fonction de la place disponible et des prescriptions des sociétés de classification.

Le schéma-bloc de la figure 5 montre la structure fonctionnelle des circuits 6 de l'armoire électrique de commande.

Un bloc d'alimentation 41 est relié au réseau de bord 40 via des disjoncteurs et des interrupteurs non représentés et fournit les différentes tensions nécessaires au fonctionnement du dispositif et des circuits. L'organe de commande 42 permet à l'utilisateur de commander le système et de fixer les paramètres d'émission; il est muni de commutateurs et de poussoirs non représentés, certains sont accessibles directement sur un panneau frontal, d'autres ne le sont pas. L'organe de commande 42 permet de choisir la durée des signaux morses émis (point, trait), la durée des pauses entre chaque code, la durée entre les séquences, etc. . . .

Un encodeur 45 est relié d'une part au générateur 43 et d'autre part au séquenceur 44 et génère des salves de signaux carrés de fréquence alternativement $f_1$ puis $f_2$ de durées et de rythme correspondant au code C de signalisation à émettre; ce dernier est contenu dans une mémoire morte, programmée spécifiquement pour chaque navire, et qui ne peut être changé ou modifié ultérieurement.

Un interface 46 fournit l'excitation des relais 50 à partir des consignes du séquenceur 44.

Un conditionneur 47 transforme les salves carrées de l'encodeur 45 en salves sinusoïdales, dont l'amplitude est commandée par un asservissement 49.

Un amplificateur 48 fournit la puissance active nécessaire à l'émetteur et en compense la puissance réactive par des réactances adéquates.

L'asservissement 49 permet de contrôler la puissance fournie à l'émetteur par action sur le gain du conditionneur 47. Il protège également l'amplificateur 48 d'une surcharge, par exemple d'un court-circuit.

Les relais 50 excités par un interface 46 assurent la commutation des alimentations des transducteurs de l'émetteur pur réaliser le balayage séquentiel de l'horizon, secteur par secteur comme décrit en regard de la fig. 5.

Des ventilateurs 51 assurent le refroidissement de l'amplificateur 48.

L'ensemble est réalisé sous forme de tiroirs non représentés trouvant place dans une armoire métallique également non représentée. Celle-ci comporte des ouïes de ventilation munies de filtres à poussière. La commande 42, le générateur 43, le séquenceur 44, l'encodeur 45, et l'interface 46 sont réalisés en technique digitale alors que le conditionneur 47 et l'asservissement 49 sont en technique analogique.

Ces organes sont construits à l'aide de circuits intégrés analogiques et digitaux, et de composants électroniques et électriques discrets, montés sur des circuits imprimés enfichables.

Les alimentations 41, l'amplificateur 48 et les relais 50 sont construits au moyen de composants électroniques, électriques et électromécaniques disponibles à ce jour.

Il va de soi qu'il est possible en fonction de l'évolution de la technologie, de modifier la conception des circuits, en particulier en recourant à un système micro-processeur pour toute la partie digitale.

## Revendications

1. Dispositif électroacoustique de signalisation et d'identification subaquatique d'un navire, caractérisé en ce qu'il comprend un émetteur comprenant au moins un transducteur électroacoustique monté sur la coque du navire de manière à être immergé et commandé par un circuit électronique agencé pour émettre à fréquence audible un signal d'identification propre au navire et constitué d'une suite de lettres ou de chiffres émis en code précédé d'un signal de début d'émission, l'émetteur et son circuit de commande étant dimensionnés pour que le signal soit émis sur au moins une fréquence choisie pour chaque navire, située entre 4 et 6 kHz, de manière à être dans le spectre de bruit propre au navire, mais au-dessus des fréquences discrètes de raies verticales du spectre et différente de leurs harmoniques et à une puissance telle que le niveau d'intensité acoustique $LI_{sl}$ (dB), ramené à la distance unité, du signal d'identification de fréquence moyenne $f_s$ (Hz) est plus grand ou égal au niveau d'intensité acoustique $LI_{bl}$, ramené à la distance unité, de la bande de bruit, centrée sur la fréquence $f_b$ (Hz), donnant lieu à la détection à grande distance du navire porteur par son bruit subaquatique propre dans le bruit de fond ambiant de la mer majoré d'un paramètre $\Delta$ dont la valeur en décibels se calcule par la relation:

$$\Delta = 40\,\alpha_s + 10 \log \frac{B_{cs}}{B_{cb}} - 15 \log \frac{f_s}{f_b} + 6,$$

où:

$\alpha_s$ = coefficient d'absorption du son en mer à la fréquence $f_s$
$B_{cs}$ et $B_{cb}$ (Hz) = bandes critiques de masquage respectivement aux fréquences $f_s$ et $f_b$.

2. Dispositif selon la revendication 1, caractérisé en ce que le circuit et l'émetteur sont agencés pour émettre un signal d'une puissance correspondant à des valeurs de $\Delta$ de 7, 14 et 19 dB pour des fréquences correspondantes de 4, 5 et 6 kHz.

3. Dispositif selon la revendication 1, caractérisé en ce que le circuit et l'émetteur sont agencés pour produire en code des signes représentant les chiffres et les lettres dont la durée est d'environ 100 à 800 ms, les espaces entre signes étant de 800 ms et les espaces entre groupes de signes représentant un chiffre ou une lettre étant de 1600 ms.

4. Dispositif selon la revendication 3, caractérisé en ce que le circuit est agencé pour produire un signal d'identification en code morse, les signes points ayant une durée de 200 ms et les signes traits une durée de 700 ms.

5. Dispositif selon la revendication 3, caractérisé en ce que le circuit est agencé pour produire un signal sur deux fréquences $f_1$ et $f_2$ différent entre elles de quelques dizaines de Hz jusqu'à 200 Hz, les signes de rang impair dans la succession des signes formant le signal étant émis à la fréquence $f_1$, les signes de rang pair à la fréquence $f_2$.

6. Dispositif selon la revendication 1, caractérisé en ce que l'émetteur comprend plusieurs

transducteurs, le circuit étant agencé pour alimenter les transducteurs au moins deux à deux, de manière à couvrir l'horizon en plusieurs secteurs.

7. Dispositif selon la revendication 1, caractérisé en ce que l'émetteur comprend quatre transducteurs placés en carré (10 à 13), le circuit de commande présentant des commutateurs aptes à brancher les transducteurs deux à deux en opposition de phase selon deux fois quatre arrangements successifs formant chacun une séquence, de manière à couvrir l'horizon en deux fois quatre secteurs d'émission, un code complet de signaux étant émis pour chaque arrangement deux à deux avec des pauses intermédiaires.

8. Dispositif selon la revendication 1, caractérisé en ce que l'émetteur est monté dans un caisson étanche (25) placé dans les fonds du navire au-dessus d'une fenêtre (7) pratiquée dans la coque, le ou les transducteurs étant placés verticalement, leurs membranes d'émission étant sensiblement dans le plan de l'ouverture de la coque.

9. Dispositif selon la revendication 1, caractérisé en ce que le circuit de commande de l'émetteur comprend un générateur d'impulsions (43) fonctionnant comme horloge et relié à un séquenceur (44) ordonnant la succession des opérations aboutissant à la formation du signal codé, lui-même branché avec l'émetteur par l'intermédiaire d'un encodeur (45) produisant au moins une fréquence d'émission du signal et d'un amplificateur (48), le générateur étant relié à un tableau de commande (42) permettant de choisir tous les paramètres d'émission.

10. Dispositif selon la revendication 9, caractérisé en ce que l'encodeur (45) est branché à l'amplificateur (48) par l'intermédiaire d'un conditionneur (47) transformant les impulsions carrées produites par l'encodeur en impulsions sinusoïdales et en ce que des relais de commutation (50) des transducteurs sont intercalés entre l'amplificateur et l'émetteur, les relais étant commandés via un interface (46) par le séquenceur (44) relié directement au tableau de commande (42).

**Patentansprüche**

1. Elektroakustische Vorrichtung zur Unterwassersignalisierung und -identifizierung eines Seefahrzeuges, dadurch gekennzeichnet, daß sie einen Sender mit mindestens einem am Schiffsrumpf unter der Wasserlinie angebrachten elektroakustischen Wandler aufweist,der von einer elektronischen Schaltung gesteuert ist und mit hörbarer Frequenz ein dem Schiff zugeteiltes, individuelles Identifikationssignal ausstrahlt, welches aus einem Vorsignal zur Anzeige des Sendebeginns und dann aus einer Reihe von kodierten Buchstaben oder Zahlen besteht, wobei der Sender und seine Betriebsschaltung so ausgeführt sind, daß das Signal auf mindestens einer dem Schiff zugeordneten Eigenfrequenz zwischen 4 kHz und 6 kHz ausgestrahlt wird und die Eigenfrequenz im Spektrum der Schiffsgeräusche, jedoch oberhalb diskreter Frequenzen vertikaler Spektrallinien und außerhalb deren Harmonischen liegt, und wobei die Sendeleistung so bemessen ist, daß die auf Einheitsabstand bezogene Schalleistung $LI_{sl}$ (dB) des Identifikationssignals mit der mittleren Frequenz $f_s$ (Hz) gleich oder größer ist als die auf Einheitsdistanz bezogene Schalleistung $LI_{bl}$ (dB) der auf die Mittenfrequenz $f_b$ (Hz) bezogenen Geräuschbande, das Ganze derart, daß auf große Entfernung die Aufspürung des Schiffes durch seine Unterwassergeräusche möglich ist, welche das Umgebungsrauschen im Meer um einen Parameter $\Delta$(dB) übersteigen, der sich nach der Beziehung

$$\Delta = 40\,\alpha_s + 10\lg\frac{B_{cs}}{B_{cb}} - 15\lg\frac{f_s}{f_b} + 6$$

berechnet, worin bedeuten:

$\alpha_s$ = Schallabsorptionskoeffizient des Meerwassers bei der Frequenz $f_s$;
$B_{cs}$ und $B_{cb}$ (Hz) = kritische Markierungsbanden bei den Frequenzen $f_s$ bzw. $f_b$.

2. Vorrichtung nach Anspruch 1, dadurch gekennzeichnet, daß die Schaltung und der Sender zum Ausstrahlen eines Signals mit einer Leistung entsprechend $\Delta$-Werten von 7, 14 und 19 dB mit entsprechenden Frequenzen von 4, 5 bzw. 6 kHz eingerichtet sind.

3. Vorrichtung nach Anspruch 1, dadurch gekennzeichnet, daß die Schaltung und der Sender zur Erzeugung von kodierten Zeichen, welche Zahlen und Buchstaben darstellen, mit einer Dauer von etwa 100 bis 800 ms eingerichtet sind, wobei die Zwischenzeiten zwischen den Zeichen 800 ms und die Zwischenzeiten zwischen Zeichengruppen, die eine Zahl oder einen Buchstaben darstellen, 1600 ms betragen.

4. Vorrichtung nach Anspruch 3, dadurch gekennzeichnet, daß die Schaltung zur Erzeugung eines Identifizierungssignals in Morsecode eingerichtet ist, wobei die Punktzeichen eine Dauer von 200 ms und die Strichzeichen eine solche von 700 ms aufweisen.

5. Vorrichtung nach Anspruch 3, dadurch gekennzeichnet, daß die Schaltung zur Erzeugung eines Signals auf zwei Frequenzen $f_1$ und $f_2$ eingerichtet ist, die sich um einige 10 Hz bis 200 Hz voneinander

unterscheiden, wobei die Zeichen mit ungerader Ordnung in deren Aufeinanderfolge im Signal mit der Frequenz $f_1$ und die Zeichen in geradem Rang mit der Frequenz $f_2$ abgestrahlt werden.

6. Vorrichtung nach Anspruch 1, dadurch gekennzeichnet, daß der Sender mehrere Wandler aufweist, und daß die Schaltung zur Versorgung der Wandler mindestens in paarweiser Schaltung eingerichtet ist, um den Horizont in mehreren Abschnitten zu überstreichen.

7. Vorrichtung nach Anspruch 1, dadurch gekennzeichnet, daß der Sender vier quadratförmig angeordnete Wandler (10–13) aufweist, und daß die Steuerschaltung Umschalter besitzt, mit denen die Wandler paarweise und gegenphasig nach zwei mal vier aufeinanderfolgenden Anordnungen schaltbar sind, welche jeweils eine Sequenz bilden, derart, daß der Horizont in zwei mal vier Sendesektoren überstrichen wird, wobei ein vollständiger Signalcode von jeder paarweisen Schaltung von Wandlern mit dazwischenliegenden Pausen abgestrahlt wird.

8. Vorrichtung nach Anspruch 1, dadurch gekennzeichnet, daß der Sender in einem wasserdichten Gehäuse (25) untergebracht ist, welches sich am Unterteil des Schiffsrumpfes oberhalb einer darin angebrachten Öffnung (7) befindet, daß der oder die Wandler vertikal eingebaut sind, und daß deren Sendemembranen mindestens angenähert in der Ebene der Öffnung im Schiffsrumpf liegen.

9. Vorrichtung nach Anspruch 1, dadurch gekennzeichnet, daß die Steuerschaltung des Senders einen Impulsgenerator (43) besitzt, der als Taktgeber arbeitet und mit einer Folgeschaltung (44) verbunden ist, welche die richtige Aufeinanderfolge der zur Bildung des kodierten Signals führenden Operationen steuert, daß die Folgeschaltung über eine Kodierschaltung (45) mit dem Sender verbunden ist, welche mindestens eine Sendefrequenz des Signals erzeugt, und daß schließlich ein Verstärker (48) vorhanden ist, wobei der Impulsgenerator mit Steuerorganen an einem Steuerpult (42) verbunden ist, an der sich die Sendeparameter einstellen lassen.

10. Vorrichtung nach Anspruch 9, dadurch gekennzeichnet, daß die Kodierschaltung (45) mit dem Verstärker (48) über einen Umsetzer (47) verbunden ist, der die von der Kodierschaltung erzeugten Rechteckimpulse in sinusförmige Impulse umwandelt, und daß Umschaltrelais (50) der Wandler zwischen dem Verstärker und dem Sender geschaltet sind, wobei die Relais über ein Interface (46) durch die Folgeschaltung (44) gesteuert werden, welche unmittelbar vom Steuerpult (42) beeinflußbar ist.

## Claims

1. An electroacoustic device for the underwater signalling and identification of a vessel, comprising: an emitter having at least one electroacoustic transducer mounted at subaqueous parts of the hull of the vessel, and an electronic circuit for controlling said transducer, the emitter being designed to emit, at audiofrequency, an identification signal specific to the vessel, said signal being constituted by a series of letters or figures emitted in code and preceded by a start-of-emission signal, the emitter and its control circuit being so rated that the signal is emitted at at least one frequency selected for each vessel and being within the range 4 to 6 kHz and simultaneously in the proper sound spectrum of the vessel, but above the discrete frequencies of the vertical lines of said spectrum and different from their harmonics, and at a strength such that the level of acoustic intensity $LI_{sl}$ (dB), converted to unit of distance, of the identification signal of mean frequency $f_s$ (Hz), is greater than or equal to the level of acoustic intensity $LI_{bl}$ of the noise band, converted to unit of distance and centred on the frequency $f_b$ (Hz), such as to result in the detection, from a great distance, of the carrier vessel by its particular underwater noise in the ambient background noise of the sea, increased by a parameter $\Delta$ the value of which in decibels is calculated by means of the relationship:

$$\Delta = 40\,\alpha_s + 10 \log \frac{B_{cs}}{B_{cb}} - 15 \log \frac{f_s}{f_b} + 6\,,$$

wherein:

$\alpha_s$ = the coefficient of absorption of sound in the sea at the frequency $f_s$,
$B_{cs}$ and $B_{cb}$ (Hz) = the screening bands at the frequencies $f_s$ and $f_b$ respectively.

2. The device according to claim 1, wherein said electronic circuit and said emitter are designed to emit a signal having an intensity in terms of $\Delta$ of 7, 14 and 19 dB for corresponding frequencies of 4, 5 and 6 kHz.

3. The device according to claim 1, wherein said electronic circuit and said emitter are designed to produce, in code, signs representing figures and letters, the duration of which is from about 100 to about 800 ms, the gaps between signs being 300 ms and the gaps between groups of signs, which represent a figure or letter, being 1600 ms.

4. The device according to claim 3, wherein said electronic circuit is designed to produce an identification signal in Morse code, the dot signs having a duration of 200 ms and the dash signs a duration of 700 ms.

5. The device according to claim 3, wherein said electronic circuit is designed to produce a signal at two frequencies $f_1$ and $f_2$ differing from each other by several tens of Hz up to about 200 Hz, the odd signs in the succession of signs forming the signal being transmitted at the frequency $f_1$, and the even signs forming the signal being transmitted at the frequency $f_2$.

6. The device according to claim 1, wherein said emitter comprises a plurality of transducers, said electronic circuit being designed to supply said transducers at least two by two, so as to cover the horizon in several sectors.

7. The device according to claim 6, wherein said emitter comprises four transducers (10 to 13) arranged to from a square, the control circuit having switches adapted to connect the transducers two by two in opposite phase in two times four successive arrangements, each forming a sequence, so as to cover the horizon in two times four emission sectors, a complete signal code being emitted for each two by two arrangement, with intermediate pauses.

8. The device according to claim 1, wherein said emitter is mounted in a water-tight case (25) near the bottom of the vessel above a window (7) formed in the hull, the transducer or transducers being positioned vertically with their emission diaphragms substantially in the plane of the opening in the hull.

9. The device according to claim 1, wherein said electronic circuit of the emitter comprises an impulse generator (43) functioning as a timer and connected to a sequencer (44) controlling the succession of operations terminating in the formation of the coded signal, itself connected with the emitter through an encoder (45) producing at least one signal-emission frequency, and through an amplifier (48), the generator being connected to a control panel (42) enabling all the emission parameters to be selected.

10. The device according to claim 9, wherein said encoder (45) is connected to said amplifier (48) through a wave form converter (47) for transforming the square impulses, produced by said encoder, into sinusoïdal impulses, and in that switching relays (50) for the transducers are arranged between said amplifier and said emitter, the relays being controlled, by way of an interface (46), by the sequencer (44) connected directly to said control panel (42).

FIG. 1

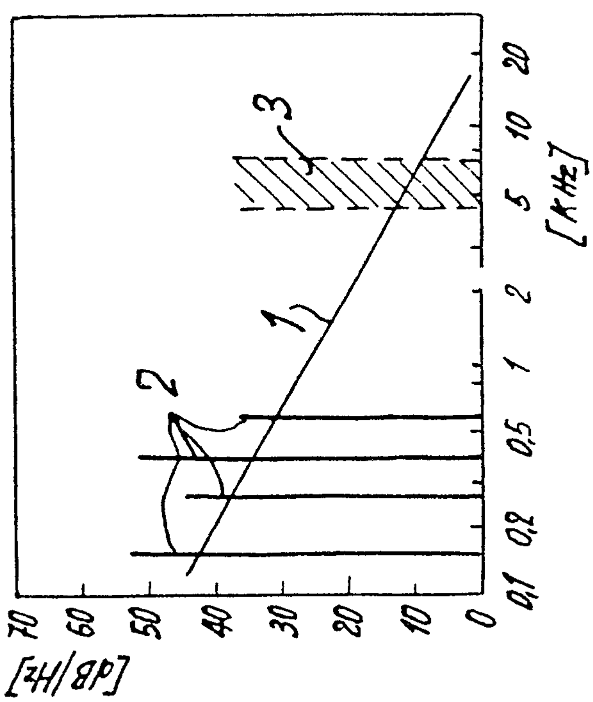


FIG. 2

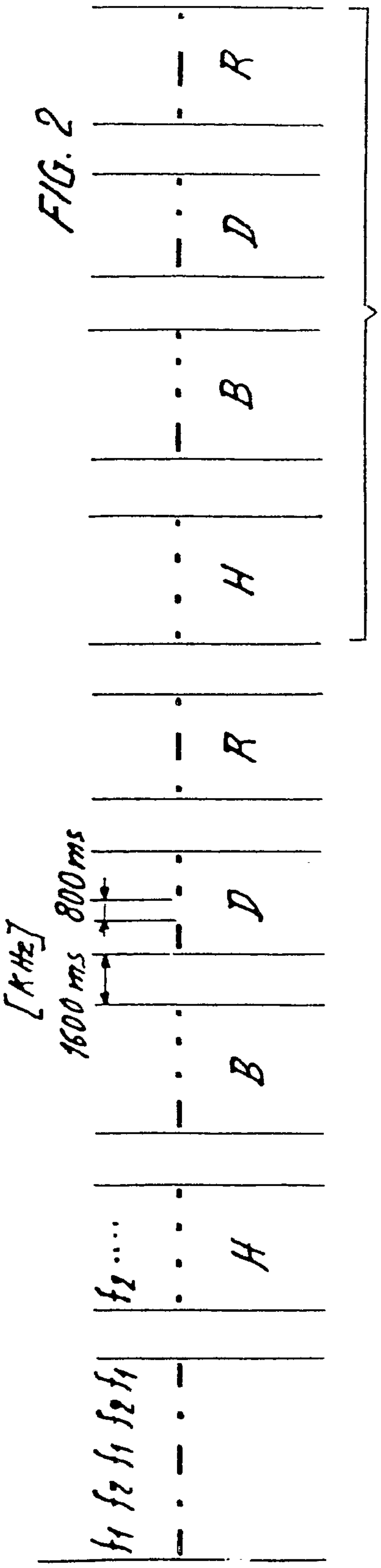


FIG. 5

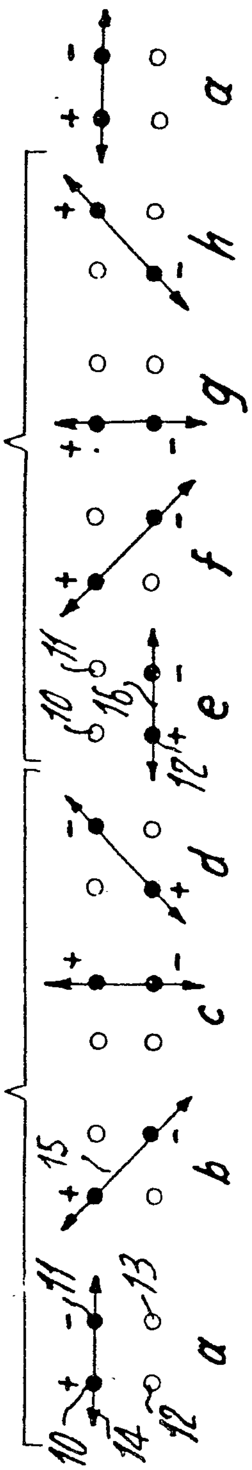

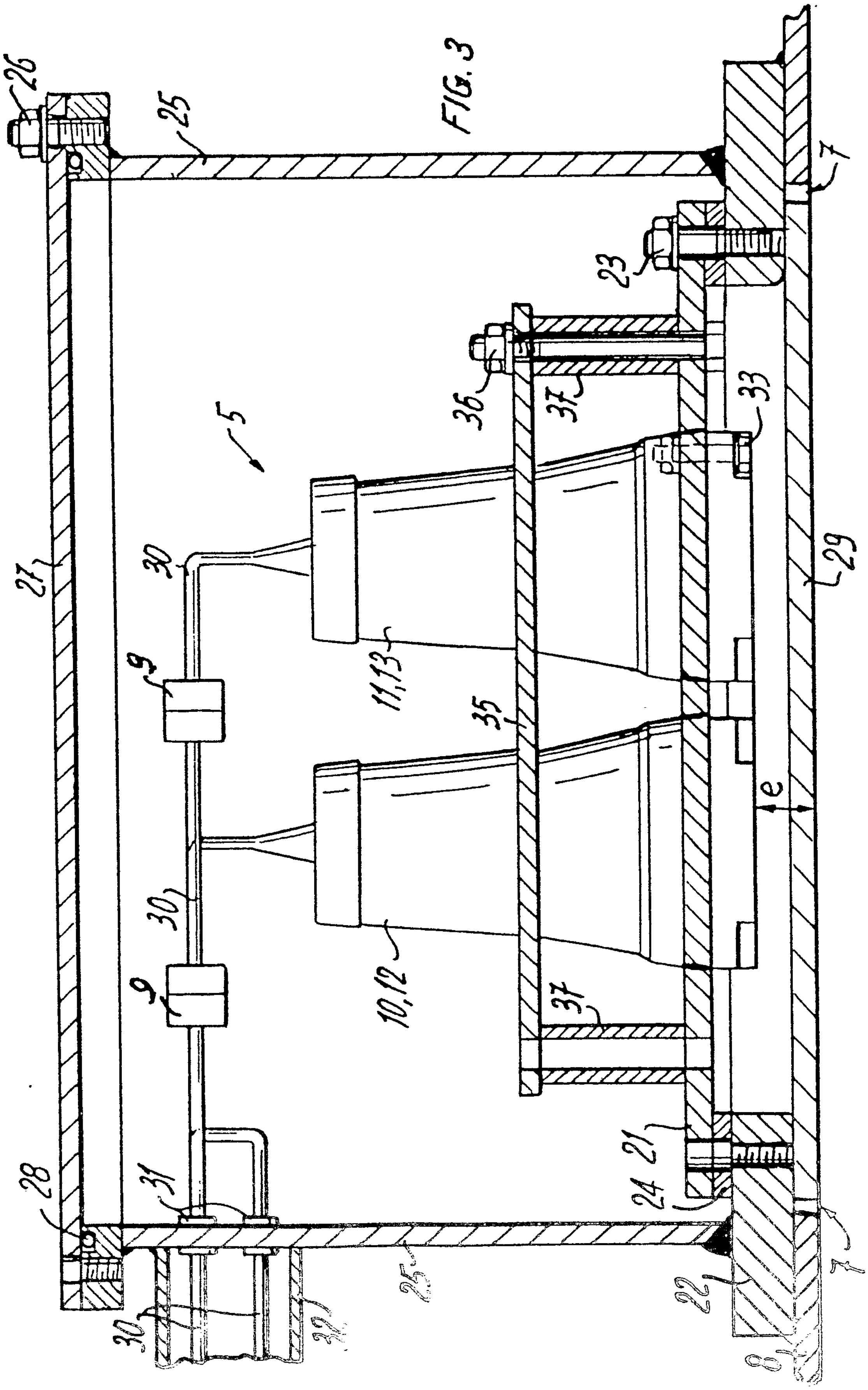


FIG. 3

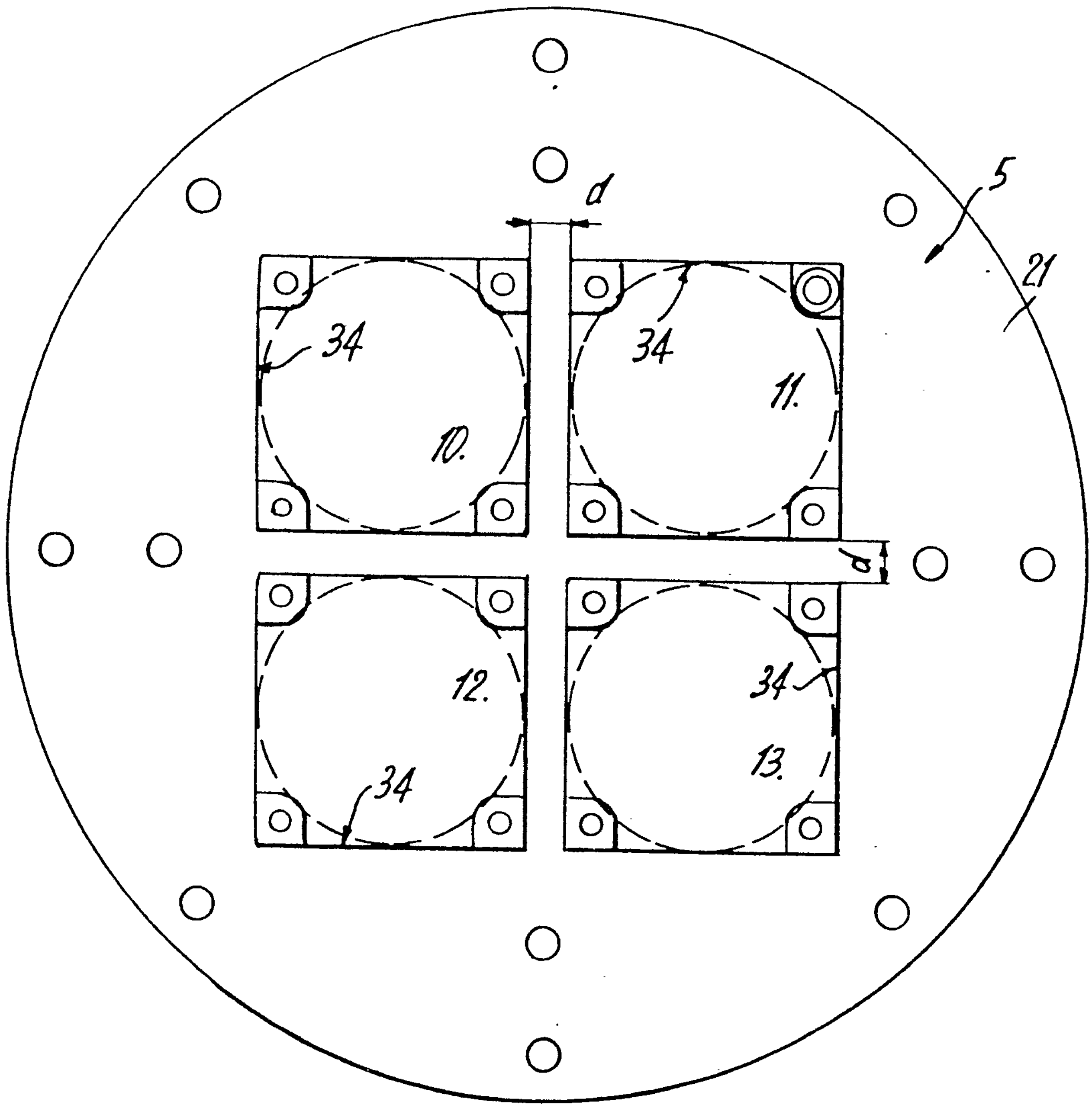


FIG. 4

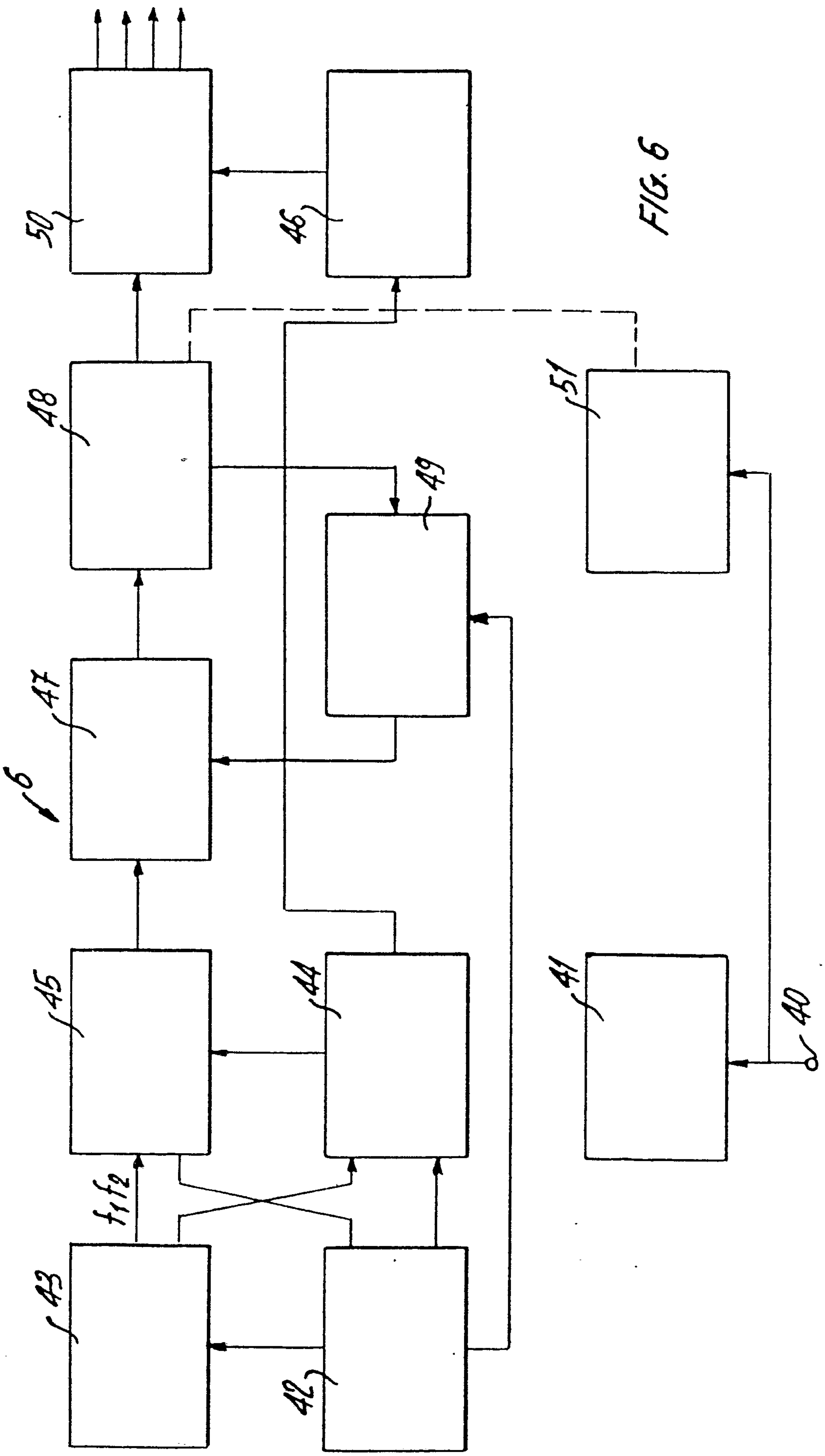


FIG. 6